# EUROPÄISCHE PATENTSCHRIFT

(11) **EP 1 322 888 B1**
(45) Veröffentlichungstag und Bekanntmachung des Hinweises auf die Patenterteilung: **16.06.2004**
(21) Anmeldenummer: 01971466.6
(22) Anmeldetag: 04.10.2001
(51) Int. Cl.: F17C 13/00, F16L 59/14

(54) **ROHRARTIGE LEITUNG ODER BEHÄLTER ZUM TRANSPORT BZW. ZUM AUFBEWAHREN KRYOGENER MEDIEN UND VERFAHREN ZUR HERSTELLUNG**
TUBULAR CONDUIT OR CONTAINER FOR TRANSPORTING OR STORING CRYOGENIC MEDIA AND METHOD FOR PRODUCING THE SAME
CONDUITE OU RECIPIENT TUBULAIRE SERVANT AU TRANSPORT OU A LA CONSERVATION DE SUBSTANCES CRYOGENES, ET PROCEDE DE REALISATION

(30) Priorität: 04.10.2000 AT 73200 U
(43) Veröffentlichungstag der Anmeldung: 02.07.2003
(73) Patentinhaber: MID Thondorf Liegenschaftsverwaltung AG & Co. KG, 8042 Graz (AT)
(72) Erfinder: BRUNNHOFER, Klaus, A-8010 Graz (AT)
(74) Vertreter: Kovac, Werner
(86) Internationale Anmeldenummer: PCT/AT2001/000318
(87) Internationale Veröffentlichungsnummer: WO 2002/029311

(56) Entgegenhaltungen:
- EP-A- 0 465 252
- US-A- 3 814 275
- US-A- 4 154 363

## Beschreibung

Die Erfindung betrifft eine rohrartige Rettung oder einen Behälter zum Transport bzw. zum aufbewahren von kryogenen Medien, insbesondere von verflüssigten Gasen, beispielsweise von flüssigem Wasserstoff, mit einem mehrlagigen Aufbau. wobei die Leitung bzw. der Behälter zumindest eine Lage aus in thermisch ausgehärtetes Harz eingebetteten Faserfäden aufweist und mit zumindest einem Flansch bzw. Verbindungsstück, weicher bzw. welches ein gesondertes Teil ist und außenseitig von zumindest einer Lage aus in thermisch ausgehärteten Harz eingebetteten Faserfäden ummantelt ist, versehen ist Die Erfindung betrifft ferner ein Verfahren zur Herstellung einer rohrartigen Leitung oder eines Behälters zum Transport bzw. zum Aufbewahren von kryogenen Medien, insbesondere von verflüssigten Gasen, beispielsweise von flüssigem Wasserstoff, wobei die Leitung bzw. der Behälter und Verwendung eines Domes mit zumindest einer Lage aus in thermisch aushärtbaren Harz getränkten Faserfäden versehen wird und mit zumindest einem Flansch bzw. Verbindungsstück, welcher bzw. welches ein gesondertes Teil ist und außenseltig von zumindest einer Lage von mit thermisch aushärtbarem Harz getränkten Faserfäden ummantelt ist, versehen ist

Wasserstoff, weicher aufgrund seines geringen Molekulargewichtes und seiner hohen Verbrennungswärme als Treibstoff der Zukunft gilt, benötigt zu seiner Verwendung in kryogener Form entsprechend wärmeisolierte Tanks und auch entsprechend wärmeisolierte und den auftretenden Belastungen standhaltende Treibstoffleitungen. Tanks und Treibstoffleitungen haben neben guten isolierenden Eigenschaften, auch einen möglichst leichten und möglichst kompakten Aufbau aufzuweisen.

Es sind bereits verschiedene Konstruktionen für Speicherbehälter oder Rohrleitungen für kryogene Medien vorgeschlagen worden. Aus der EP-A-0 465 252 ist ein Behälter der eingangs genannten Art bekannt. Dieser Behälter ist außenseitig mit einer Lage aus einem Composite - Material versehen, die derart hergestellt wird, dass ein Faserfaden kontinuierlich gewickelt und anschließend in eine Matrix aus Kunststoff eingebettet wird. Aus der FR-A 2 753 257 ist eine Rohrleitung für kryogene Flüssigkeit bekannt, die sich, von innen nach außen betrachtet, aus einem Innenrohr aus einer Eisen-Nickellegierung, einer dünnen Schicht aus Aluminium. daran anschließend einer Lage aus Kohlenstofffasern, einer Wärmeisolierung aus superisolierendem Material und einer äußeren Umhüllung zusammensetzt Die GB-A 3 897 490 befasst sich ebenfalls mit einem Leitungssystem für tiefkalte Medien, beispielsweise Helium, bei dem ein Innen- und ein Außenrohr vorgesehen sind, wobei sich an der Außenseite des innenrohres ein Drahtnetz befindet, bei weichem eine aus beschichteten Metallfolien bestehende Wärmeisolierung aufgebracht ist. Der Raum zwischen innen- und Außenrohr wird zusätzlich vakuumisoliert.

Bei den bekannten Konstruktionen werden die erforderlichen Verbindungsstücke bzw. Flansche mit den Rohrleitungen gesondert zusammengefügt. Dazu wird beisplelsweise Kleben oder Verschweißen angewendet Gerade die Verbindungsstellen der Flansche sind oft Schwachstellen, da hier, aus konstruktiven Gründen, einerseits die Isolierung mangelhaft ist und andererseits die im Betrieb auftretenden Kräfte, insbesondere Torsionskräfte, oft nicht ausreichend aufgefangen werden können.

Hier setzt nun die Erfindung ein, deren Aufgabe darin besteht, Rohrleitungen bzw. Behälter für kryogene Medien derart auszugestalten bzw, verfahrenstechnisch derart herzustellen, dass die erwähnten Probleme im Übergangsbereich bzw. Verbindungsbereich zu Flanschen und dergleichen zumindest weitgehend nicht mehr auftreten Können.

Was den konstruktiven Aufbau der Rohrleitung bzw. des Behälters betrifft, wird die gestellte Aufgabe erfindungsgemäß dadurch gelöst, dass der Flansch bzw. das Verbindungsstück auf zumindest einer Lage aus in thermisch ausgehärtetem Harz eingebetteten Faserfäden sitzt und derart in den Aufbau der Leitung bzw. des Behälters integriert worden ist.

Was das Verfahren betrifft, wird die gestellte Aufgabe erfindungsgemäß dadurch gelöst, dass auf den Dom zumindest eine Lage von in thermisch aushärtbarem Harz getränkte Faserfäden aufgebracht wird, auf welcher der Flansch bzw. das Verbindungsstück positioniert wird, der Flansch bzw. das Verbindungsstück außenseitig mit zumindest einer weiteren Lage aus in thermisch aushärtbarem Harz getränkten Faserfäden ummantelt wird, das Harz thermisch ausgehärtet und der Dorn entfernt wird.

Das gesonderte nachträgliche Verbinden der Flansche bzw. der Verbindungsstücke mit der fertigen Rohrleitung bzw. dem Behälter entfällt daher, da diese Verbindungsstücke In die Rohrleitung bzw. den Behälter integriert sind bzw. werden. Das Einbinden der Verbindungsstücke erfolgt mit Faser verstärktem Kunststoff. weicher aus harzgetränkten Faserfäden erstellt wird. Dadurch können nicht nur eine nicht nur eine absolut dichte Verbindung dieser Teile miteinander sondern auch das erforderliche Aufnahmevermögen von Kräften gewährleistet werden.

Die im Betrieb auftretenden Torsions- und Scherkräfte können dann besonders gut aufgenommen werden, wenn möglichst viele der Bestandteile bzw. Lagen, zumindest jedoch die innerste und/oder die äußerste Lage, der rohrartigen Leitung bzw. des Behälters aus Faser verstärktem Kunststoff bestehen (Anspruch 2).

Besonders stabil und doch auch ausreichend flexibel sind erfindungsgemäß ausgeführte Leitungen oder Behälter dann, wenn die Lagen aus Faser verstärktem Kunststoff aus zumindest einem in den Kunststoff eingebetteten, spiralig gewickelten Faserfaden bestehen, der insbesondere zumindest im Wesentlichen, quer zur Längserstreckung der Leitung oder des Behälters gewickelt ist (Ansprüche 3 und 4).

Die die Verbindungsstücke einbindende Lage weist insbesondere ein in Kunststoff eingebettetes Gewebe auf, dessen Fäden unter einem Winkel in der Größenordnung von 45° zur Längserstreckung der Leitung oder des Behälters orientiert sind (Ansprüche 5 und 6). Dies stellt in den ansonsten sehr heiklen Übergangsbereichen zu den Verbindungsstücken ein sehr gutes Aufnahmevermögen für Torsionskräfte sicher.

Bei einer bevorzugten Ausführungform der Leitung oder des Behälters ist um eine innere Lage in einem Abstand von dieser ein Stützrohr bzw. ein Stützmantel angeordnet, welches bzw. welcher gemeinsam mit dem bzw. den Verbindungsstück(en) von einer Lage aus Faser verstärktem Kunststoff ummantelt ist (Anspruch 7). Damit wird eine Konstruktion geschaffen, bei der als zusätzliche isolierende Maßnahme der zwischen der betreffenden Lage und dem Stützrohr bzw. Stützmantel gebildeten Zwischenraum evakuiert werden kann.

Zusätzlich können zwischen dem Stützrohr bzw. dem Stützmantel und dem bzw. den Verbindungsstück(en) ringartige Übergangsstücke, durch die der Abstand des Stützrohres bzw. Stützmantels zur benachbarten inneren Lage eingestellt bzw. gehalten wird, enthalten sein (Anspruch 8).

Für die vorgesehene Einsatzzwecke, Transport bzw. Aufbewahrung von kryogenen Medien, eignen sich als Fasern vor allem Kohle- oder Glasfasern und als Kunststoff ein Harz (Ansprüche 9 und 10).

Die Leitung bzw. der Behälter lassen sich auf einfache, rationelle und damit auch sehr wirtschaftliche Weise herstellen.

In diesem Zusammenhang ist beispielsweise vorgesehen, dass die einzelnen Bestandteile bzw. Lagen auf einem Dom, welcher nach Fertigstellung der Leitung bzw. des Behälters entfernt wird, schrittweise aufgebracht werden (Anspruch 12).

Dabei wird als innerste Lage direkt auf dem Dom eine Lage aus einem harzgetränktem Faserfaden aufgebracht (Anspruch 13). Auch auf die die Verbindungsstücke einbindenden Faserfäden wird zumindest eine weitere Lage aus harzgeränkten Faserfäden aufgebracht (Anspruch 14). Damit lassen sich eine gewisse Flexibilität bei großer Festigkeit und sehr gutem Aufnahmevermögen für Kräfte erreichen.

Besonders einfach gestaltet sich das Herstellen der einzelnen Lagen dann, wenn diese durch spiraliges Wickeln eines Faserfadens, welcher durch ein Harzbad gezogen wurde, erstellt werden, wobei der Faserfaden zumindest im Wesentlichen quer zur Längserstreckung der Leitung bzw. des Behälters gewickelt wird (Ansprüche 15 und 16).

Gemäß einer bevorzugten Ausführungsform der Erfindung sind dabei die die Verbindungsstücke einbindenden Faserfäden Bestandteil eines Fasergewebes, welches mit einem in Harz getränktem Faserfaden umwickelt wird (Anspruch 17). Das Fasergewebe braucht daher nicht gesondert mit Harz durchtränkt werden, was die Herstellung ebenfalls vereinfacht.

Wird das Fasergewebe in der Form eines Strumpfes oder Schlauches aufgebracht, so rationalisiert auch dies das Herstellverfahren (Anspruch 18).

Für das Aufnahmevermögen von Torsionskräften im Bereich der Verbindungsstücke ist es vor allem von Vorteil, wenn das Fasergewebe derart aufgebracht wird, dass die Fäden unter einem Winkel in der Größenordnung von 45° zur Längserstreckung der Leitung bzw. des Behälters orientiert sind (Anspruch 19).

Ein gesondertes Stützrohr bzw. ein Stützmantel lässt sich auf einfache Weise unter Einsatz von Übergangsstücken während der Herstellung der Leitung bzw. des Behälters positionieren und einbauen (Anspruch 20).

Dabei werden zur Sicherstellung eines festen Verbundes der einzelnen Bestandteile das bzw. die Verbindungsstücke), das bzw. die Übergangsstück(e) und das Stützrohr bzw. der Stützmantel gemeinsam mit Harz getränkten Faserfäden ummantelt (Anspruch 21).

Für die vorgesehenen Einsatzzwecke sind Faserfäden aus Kohlefaser oder Glasfaser besonders geeignet (Anspruch 22).

Um ein zumindest weitgehend übereinstimmendes Dehnungsverhalten wesentlicher Bestandteile der Leitung bzw. des Behälters sicher zu stellen, ist es von Vorteil, wenn das Stützrohr bzw. der Stützmantel, die Verbindungsstücke und die Übergangsstücke aus der gleichen Faserart, insbesondere aus Kohlefaser, bestehen (Anspruch 23).

Weitere Merkmale, Vorteile und Einzelheiten der Erfindung werden nun anhand der Zeichnung, die schematische Darstellungen von Ausführungsbeispielen der Erfindung enthält, näher beschrieben. Dabei zeigen
Fig. 1 ein Ausführungsbeispiel einer erfindungsgemäß hergestellten und erfindungsgemäß ausgeführten Rohrleitung mit einem integrierten Verbindungsstück, wobei die linke Hälfte einen Längsschnitt und die rechte Hälfte die Außenansicht darstellen, und
Fig. 2 ein zweites Ausführungsbeispiel einer Rohrleitung in einer zu Fig. 1 analogen Darstellung.

Anhand der beiden in den Zeichnungsfiguren dargestellten Ausführungsbeispiele werden nachfolgend sowohl der konstruktive Aufbau als auch die Herstellung erfindungsgemäß ausgeführter Rohrleitungen erläutert.

Bei den dargestellten Ausführungsformen handelt es sich beispielhaft um Rohrleitungen mit kreisförmigem Querschnitt, wie sie etwa als Kraftstoffleitungen für kryogenen Treibstoff, beispielsweise flüssigen Wasserstoff, bei Raumtransportem eingesetzt werden können.

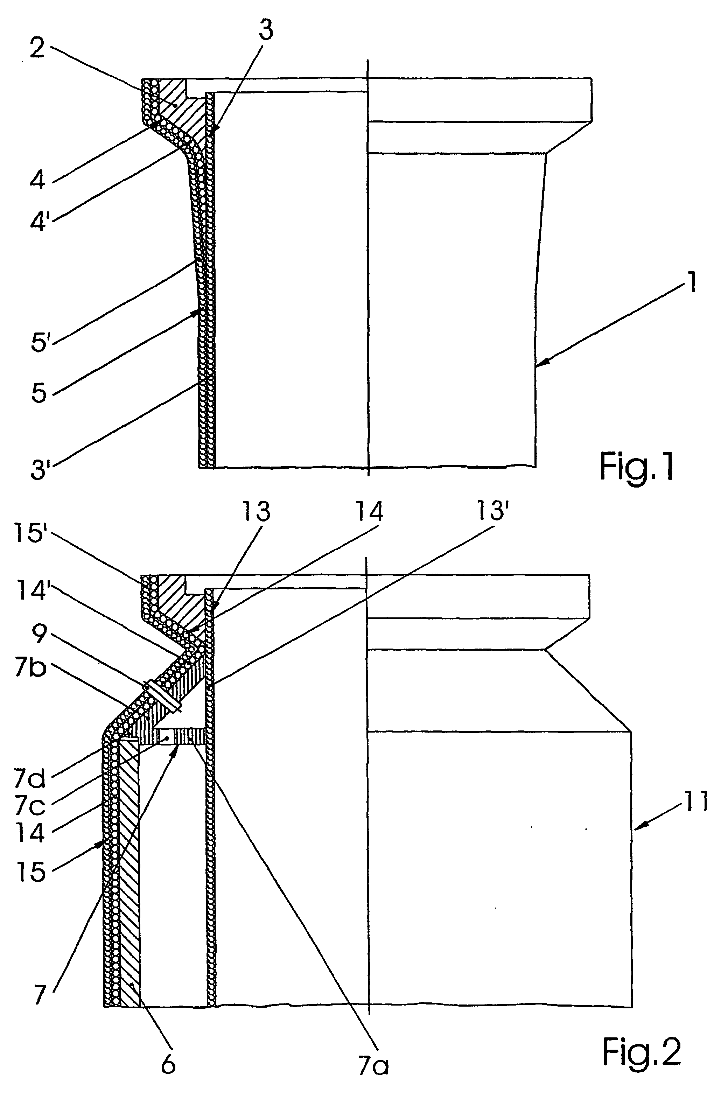

Fig. 1 zeigt ein Teilstück eines Rohres 1 mit einem in den Rohrendbereich integrierten Flansch bzw. Verbindungsstück 2. Ein weiteres übereinstimmend oder abweichend ausgeführtes Verbindungsstück kann auch am zweiten nicht dargestellten Rohrende vorgesehen werden. Der konstruktive Aufbau des Rohres 1 und das Integrieren des Verbindungsstückes 2 ergeben sich aus der Art der Herstellung, die im Folgenden näher beschrieben wird.

Zur Herstellung des Rohres 1 wird ein in Fig. 1 nicht gezeigter Dorn, welcher beispielsweise aus Metall bestehen kann, verwendet. Der Dom weist eine Außenkontur auf, die der Innenseite des zu bildenden Rohres 1 entspricht. Das Rohr 1 wird auf dem Dorn aus zumindest zwei Lagen aufgebaut. Die innerste Lage 3 wird durch Umwickeln des Doms mit einem Kohlefaserfaden 3, der während des Wickelvorganges in bekannter Weise durch ein Harzbad gezogen wird, erstellt. Der Wickelvorgang erfolgt derart, dass der Kohlefaserfaden spiralig in zumindest einer Lage gewickelt wird, sodass die entstehende Lage 3' in sich geschlossen und somit dicht ist. Auf die beiden Endbereiche der rohrförmigen Lage 3' werden anschließend die vorgesehenen bzw. erforderlichen Verbindungsstücke 2 aufgesetzt. Fig. 1 zeigt eines der Verbindungsstücke 2, das ein vorgefertigtes Bauteil ist, welches insbesondere ebenfalls aus Kohlefaser besteht und durch Drehen eines dickwandigeren Kohlefaserrohres hergestellt sein kann. Eine Übereinstimmung im Material - hier Kohlefaser-für die einzelnen Rohnagen und die Verbindungsstücke 2 ist aufgrund des gleichen Dehnungsverhaltens von Vorteil. Die Verbindungsstücke 2 können aber auch aus einem anderen Material, jedoch mit ähnlichem Dehnungsverhalten wie Kohlefaser, bestehen.

Wie Fig. 1 zeigt, wird das Verbindungsstück 2 insbesondere so ausgeführt, dass sein am Rohrendbereich aufgesetzter Bereich mit einem sich verjüngendem Querschnitt versehen ist, um außenseitig einen weitgehend stufenlosen Übergangsbereich zur Lage 3 zu erstellen. Über das Verbindungsstück 2 und zumindest noch einen Teil der Lage 3' wird ein Strumpf bzw. ein Schlauch 4 aus Kohlefasergewebe gezogen. Der Strumpf bzw. Schlauch 4 aus Kohlefasergewebe wird bevorzugt über die gesamte Länge der Lage 3' und beide Verbindungsstücke 2 gezogen und ist zumindest soweit dehnbar, dass er sich über die Außenseite des Verbindungsstückes 2 und den diesem benachbarten Bereich der Lage 3 ziehen lässt und sich dort auch gut anlegt. Die einzelnen Fäden, die Kett- bzw. Schussfäden, aus denen das Gewebe besteht, sind im Strumpf bzw. Schlauch 4 insbesondere so orientiert, dass sie in der fertig gestellten Rohrleitung Kräfte, Torsionskräfte sowie Beanspruchungen auf Biegung, besonders gut aufnehmen können. Dies ist beispielsweise bei einer Orientierung der Fäden in einem Winkel von 45° oder nahe 45° gegenüber der Längserstreckung des Rohres 1 der Fall.

Über den aufgezogenen bzw. positionierten Strumpf bzw. Schlauch 4 wird wieder eine Kohlefaserfaden 5, der vorher durch ein Harzbad gezogen wird, spiralig gewickelt. Während des Wickelns des harzgetränkten Kohlefaserfadens 5 wird auch der aus Kohlefasergewebe bestehende Strumpf bzw. Schlauch 4 mit Harz getränkt. Nach dem Fertigstellen der äußeren Lage 5' durch ein- oder mehrlagiges Wickeln des Kohlefaserfadens 5, wird das nun vom Aufbau her fertige Rohr 1 in einem Autoklaven Wärme ausgesetzt, um die Harzbestandteile thermisch auszuhärten. Das fertig gestellte Rohr 1 wird schließlich vom Dom abgezogen.

Die Wicklung des Kohlefaserfadens zur Herstellung der Lagen 3' und 5' erfolgt bevorzugt unter einem kleinen Winkel von insbesondere 1 bis 5° zur Querrichtung des Rohres 1, wobei, wie bereits erwähnt, die einzelnen Windungen dicht an dicht gewickelt werden.

Das derart hergestellte Rohr 1 besteht somit aus zwei mit Kohlefaser verstärkten Kunstsstoff-Lagen 3', 5', integrierten Verbindungsstücken 2 und einer weiteren die Verbindungsstücke 2 einbindenden mit Kohlefaser verstärkten Kunststoff-Lage 4'.

Die zweite, in Fig. 2 dargestellte Ausführungsform einer Rohrleitung sieht zusätzlich einen doppelwandigen Aufbau des Rohres 11 mit Vakuumisolierung und gegebenenfalls mit gesondertem Strahlenschutz vor. Die Herstellung dieser Ausführungsvariante erfolgt ähnlich zu jener gemäß Fig. 1.

Wie bei der Ausführungsform gemäß Fig. 1 wird zuerst auf einen in Fig. 2 nicht dargestellten Dom ein harzgetränkter Kohlefaserfaden 13 gewickelt. Auf die derart erstellte innere Lage 13' wird ein vorgefertigtes Stützrohr 6 bzw. ein Stützmantel, welches bzw. welcher insbesondere ebenfalls aus Kohlefaser besteht und dessen Innendurchmesser größer ist als der Außendurchmesser der inneren Lage 13', mit Hilfe von Übergangsstücken 7 an seinen beiden Endbereichen positioniert. Jedes Übergangsstück 7 ist als mittig zweigeteilter Ring ausgeführt. Der Ring bzw. jede Ringhälfte weist ein kreisringförmig umlaufendes Basisteil 7a und einen von diesem am äußeren Rand unter einem spitzen Winkel angesetzten Mantel 7b auf. Das Basisteil 7a und der Mantel 7b enden innenseitig auf übereinstimmenden Durchmessern, die dem Außendurchmesser der inneren Lage 13' entsprechen.

Am Basisteil 7a ist außenseitig eine umlaufende Stützschulter 7d ausgebildet, wo das Ende des Stützrohres 6 abgestützt bzw. positioniert wird. Das Basisteil 7a ist mit einer Anzahl von Löchern 7c versehen, auf deren Funktion weiter unten eingegangen wird. Bei positioniertem und mittels des Übergangsstückes 7 gehaltenem Stützrohr 6 verbleibt zum freien Ende der inneren Lage 13' ausreichend Platz zum Aufsetzen bzw. Positionieren eines Verbindungsstückes 12. Über das Verbindungsstück 12, das zweite nicht dargestellte Verbindungsstück, die Übergangsstücke 7 und das Stützrohr 6 wird ein Strumpf bzw. Schlauch 14 aus Kohlefasergewebe, dessen Ausführung jener gemäß dem ersten Ausführungsbeispiel entsprechen kann, gezogen. Anschließend wird eine äußere Lage 15' durch Umwickeln des Strumpfes bzw. Schlauches 14 mit einem harzgetränkten Kohlefaserfaden 15 gebildet. Der harzgetränkte Kohlefaserfaden durchtränkt auch den aufgezogenen Strumpf bzw. Schlauch 14. Nach dem Beenden des Wickelvorganges wird das Rohr 11 durch thermische Aushärtung des Harzes fertig gestellt und es wird der Dom entfernt.

Das fertig hergestellte Rohr 11 weist daher, von innen nach außen betrachtet, einen Aufbau mit einer Kohlefaser verstärkten inneren Kunststoff-Lage 13', einem von dieser beabstandetem Stützrohr 6, welches außen von zwei weiteren Kohlefaser verstärkten Lagen 14' und 15' ummantelt ist, auf. Das Verbindungsstück 12 ist in diesen Aufbau durch das Ummanteln mit den Lagen 14' und 15' integriert.

Wie Fig. 2 zeigt, kann über einen nachträglich von außen durch den Mantel 7b des Übergangsstückes 7 eingebrachten Nippel 9 im Raum zwischen dem Stützrohr 6 und der inneren Lage 13' ein isolierendes Vakuum erzeugt werden. Die Löcher 7c stellen dabei die erforderliche Verbindung vom Inneren des Übergangsstückes 7 zum erwähnten Zwischenraum her.

Zusätzlich kann in dem vom Stützrohr 6 geschaffenen Zwischenraum eine Multi-Layer-Isolation, die in bekannter Weise aus mehreren, beispielsweise aus zehn bis zwanzig Schichten von mit Aluminium beschichteter Folie bestehen kann, die voneinander durch eine Konstruktion aus Papier oder Kunststoff isoliert bzw. beabstandet sind, eingebracht sein.

Bei der dargestellten und beschriebenen Ausführungsform wird von Kohlefaser als Material für den zu wickelnden Faden und das Gewebe ausgegangen. Kohlefaserfäden sind auf Grund ihrer physikalischen Eigenschaften das bevorzugte Material. Es kommen jedoch auch Glasfasern oder andere Fasern in Betracht.

Abweichend von den dargestellten und beschriebenen Ausführungsformen kann, je nach Einsatzzweck; auch vorgesehen werden, auf das Aufbringen eines strumpf- bzw. schlauchartigen Gewebes zu verzichten. Alternativ zur Strumpf- bzw. Schlauchform kann das Gewebe auch in einer Streifenform gefertigt und durch ein Umwickeln aufgebracht werden. Die Anzahl der zu wickelnden Lagen des getränkten Faserfadens zur Herstellung der inneren und der äußeren Lagen richtet sich nach dem im Betrieb auftretenden Innendruck, sodass durch zusätzliche Wickellagen ein höherer Innendruck aufgefangen werden kann. Im Rohraufbau können ferner zur Verbesserung der Isolierwirkung oder zur Sicherstellung der Vakuumdichtheit weitere Lagen, zum Beispiel aus Metallfolie, eingebracht bzw. vorgesehen werden. Es können auch mehr als zwei Lagen aus harzgetränktem und gewickeltem Faden vorgesehen werden. Der erfindungsgemäße Aufbau bzw. das erfindungsgemäße Verfahren ist nicht auf die Herstellung von Rohrleitungen beschränkt. Auch insbesondere zylindrisch geformte Behälter zum Aufbewahren kryogener Medien können einen erfindungsgemäßen Aufbau aufweisen und erfindungsgemäß hergestellt sein.

## Patentansprüche

1. Rohrartige Leitung oder Behälter zum Transport bzw. zum Aufbewahren von kryogenen Medien, insbesondere von verflüssigten Gasen, beispielsweise von flüssigem Wasserstoff, mit einem mehrlagigen Aufbau, wobei die Leitung bzw. der Behälter zumindest eine Lage aus in thermisch ausgehärteten Harz eingebetteten Faserfäden aufweist und mit zumindest einem Flansch bzw. Verbindungsstück, welcher bzw. welches ein gesondertes Teil ist und außenseitig von zumindest einer Lage (4', 14') aus in thermisch ausgehärtetem Harz eingebetteten Faserfäden ummantelt ist, versehen ist,
**dadurch gekennzeichnet,**
**dass** der Flansch bzw. das Verbindungsstück (2,12) auf zumindest einer Lage (3',13') aus in thermisch ausgehärtetem Harz eingebetteten Faserfäden sitzt und derart in den Aufbau der Leitung bzw. des Behälters integriert worden ist.

2. Leitung oder Behälter nach Anspruch 1, **dadurch gekennzeichnet, dass** die Lagen (3', 13', 5', 15') aus Faser verstärktem Kunststoff aus zumindest einem in den Kunststoff eingebetteten, spiralig gewickelten FaserFaden (3, 13, 5, 15) bestehen.

3. Leitung oder Behälter nach Anspruch 1 oder 2, **dadurch gekennzeichnet, dass** der Faserfaden zumindest im Wesentlichen quer zur Längserstreckung der Leitung oder des Behälters gewickelt ist.

4. Leitung oder Behälter nach einem der Ansprüche 1 bis 3, **dadurch gekennzeichnet, dass** die die Verbindungsstücke (2, 12) einbindende Lage (4', 14') ein in Kunststoff eingebettetes Gewebe ist.

5. Leitung oder Behälter nach Anspruch 4, **dadurch gekennzeichnet, dass** die Fäden des Gewebes unter einem Winkel in der Größenordnung von 45° zur Längserstreckung der Leitung oder des Behälters orientiert sind.

6. Leitung oder Behälter nach einem der Ansprüche 1 bis 5, **dadurch gekennzeichnet; dass** um eine innere Lage (13') in einem Abstand von dieser ein Stützrohr (6) bzw. Stützmantel angeordnet ist, welches bzw. welcher gemeinsam mit dem bzw. den Verbindungsstücken (12) von einer Lage (14') aus Faser verstärktem Kunststoff ummantelt ist.

7. Leitung oder Behälter nach einem der Ansprüche 1 bis 6, **dadurch gekennzeichnet, dass** zwischen dem Stützrohr (6) bzw. dem Stützmantel und dem bzw. den Verbindungsstücken (12) ringartige Übergangsstücke (7) enthalten sind.

8. Leitung oder Behälter nach einem der Ansprüche 1 bis 7, **dadurch gekennzeichnet, dass** die Fasern Kohle- oder Glasfasern sind.

9. Leitung oder Behälter nach einem der Ansprüche 1 bis 8, **dadurch gekennzeichnet, dass** der Kunststoff ein Harz ist.

10. Verfahren zur Herstellung einer mehrlagig aufgebauten rohrartigen Leitung oder eines mehrlagig aufgebauten Behälters zum Transport bzw. zum Aufbewahren von kryogenen Medien, insbesondere von verflüssigten Gasen, beispielsweise von flüssigem Wasserstoff, wobei die Leitung bzw. der Behälter unter Verwendung eines Domes mit zumindest einer Lage aus mit thermisch aushärtbarem Harz getränkten Faserfäden versehen wird und mit zumindest einem Flansch bzw. Verbindungsstück, welcher bzw. welches ein gesondertes Teil ist und welcher bzw. welches außenseitig von zumindest einer Lage aus in thermisch aushärtbarem Harz getränkten Faserfäden ummantett wird, versehen wird,
**dadurch gekennzeichnet,**
**dass** auf den Dom zumindest eine Lage (3', 13') von in thermisch aushärtbarem Harz getränkten Faserfäden aufgebracht wird, auf welcher der Flansch bzw. das Verbindungsstück (2, 12) positioniert wird, der Flansch bzw, das Verbindungsstück (2,12) außenseitig mit zumindest einer weiteren Lage (4', 14') aus in thermisch aushärtbarem Harz getränkten Faserfäden ummantelt wird, das Harz thermisch ausgehärtet und der Dom entfernt wird.

11. Verfahren nach Anspruch 10, **dadurch gekennzeichnet, dass** als innerste Lage direkt auf den Dom eine Lage aus einem harzgetränkten Fässerfaden aufgebracht wird.

12. Verfahren nach Anspruche 10 oder 11, **dadurch gekennzeichnet, dass** auf die die Verbindungsstücke (12) einbindenden Faserfäden (4, 14) zumindest eine weitere Lage aus harzgetränkten Faserfäden (5, 15) aufgebracht wird.

13. Verfahren nach einem der Ansprüche 10 bis 12, **dadurch gekennzeichnet, dass** die Lagen durch spiraliges Wickeln eines Faserfadens (3, 13, 5, 15), weicher durch ein Harzbad gezogen wurde, erstellt werden.

14. Verfahren nach Anspruch 13, **dadurch gekennzeichnet, dass** der Faserfaden (3, 13, 5, 15) zumindest im Wesentlichen quer zur Längserstreckung der Leitung bzw. des Behälters gewickelt wird.

15. Verfahren nach Anspruch 10 oder 11, **dadurch gekennzeichnet, dass** zumindest die die Verbindungsstücke (2, 12) einbindenden Faserfäden Bestandteile eines Fasergewebes sind, welches mit einem mit Harz getränktem Faserfaden (5,15) umwickelt wird.

16. Verfahren nach Anspruch 15, **dadurch gekennzeichnet, dass** das Fasergewebe in der Form eines Strumpfes oder Schlauches (4, 14) aufgebracht wird.

17. Verfahren nach Anspruch 15 oder 16, **dadurch gekennzeichnet, dass** das Fasergewebe derart aufgebracht wird, dass die Fäden unter einem Winkel in der Größenordnung von 45° zur Längserstreckung der Leitung bzw. des Behälters orientiert sind.

18. Verfahren nach einem der Ansprüche 10 bis 17, **dadurch gekennzeichnet, dass** auf eine innere Lage (13') unter Einsatz von übergangsstücken (7) ein Stützrohr (6) bzw. ein Stützmantel aufgebracht wird.

19. Verfahren nach Anspruch 18, **dadurch gekennzeichnet, dass** das bzw. die Verbindungsstücke) (12), das bzw. die Übergangsstück(e) (7) und das Stützrohr (6) bzw, der Stützrnantel gemeinsam mit harzgetränkten Faserfäden ummantelt werden.

20. Verfahren nach einem der Ansprüche 10 bis 19, **dadurch gekennzeichnet, dass** die Faserfäden Kohlefaser- oder Glasfaserfäden sind.

21. Verfahren nach einem der Ansprüche 10 bis 21, **dadurch gekennzeichnet. dass** das Stützrohr bzw. der Stützmantel, die Verbindungsstücke (2, 12) und die Übergangsstücke (7) aus der gleichen Faserart, insbesondere aus Kohlefaser, bestehen.

## Claims

1. A tubular line or container for transporting or keeping cryogenic media, in particular liquefied gases, for example liquid hydrogen, with a multi-layered construction, the line or the container having at least one layer of fiber filaments embedded in thermally cured resin and provided with at least one flange or connecting piece, which is a separate part and is sheathed on the outside by at least one layer (4', 14') of fiber filaments embedded in thermally cured resin, **characterized in that** the flange or the connecting piece (2, 12) sits on at least one layer (3', 13') of fiber filaments embedded in thermally cured resin and having been integrated in such a way into the construction of the line or the container.

2. The line or container as claimed in claim 1, **characterized in that** the layers (3', 13', 5', 15') consist of fiber-reinforced plastic comprising at least one spirally wound fiber filament (3, 13, 5, 15) which is embedded in the plastic.

3. The line or container as claimed in claim 1 or 2, **characterized in that** the fiber filament is wound at least substantially transversely in relation to the longitudinal extent of the line or the container.

4. The line or container as claimed in one of claims 1 to 3, **characterized in that** the layer (4', 14') incorporating the connecting pieces (2, 12) is a woven fabric embedded in plastic.

5. The line or container as claimed in claim 4, **characterized in that** the filaments of the fabric are oriented at an angle of the order of 45° in relation to the longitudinal extent of the line or the container.

6. The line or container as claimed in one of claims 1 to 5, **characterized in that** a supporting tube (6) or a supporting casing which is sheathed together with the connecting piece or pieces (12) by a layer (14') of fiber-reinforced plastic is arranged around an inner layer (13'), at a distance from it.

7. The line or container as claimed in one of claims 1 to 6, **characterized in that** annular transitional pieces (7) are contained between the supporting tube (6) or the supporting casing and the connecting piece or pieces (12).

8. The line or container as claimed in one of claims 1 to 7, **characterized in that** the fibers are carbon or glass fiber.

9. The line or container as claimed in one of claims 1 to 8, **characterized in that** the plastic is a resin.

10. A process for producing a pipe-like line of a multi-layered construction or a container of a multi-layered construction for transporting or keeping cryogenic media, in particular liquefied gases, for example liquid hydrogen, the line or the container being provided by using a mandrel with at least one layer of fiber filaments impregnated with thermally curable resin and being provided with at least one flange or connecting piece, which is a separate part and is sheathed on the outside by at least one layer of fiber filaments impregnated in thermally curable resin, **characterized in that** at least one layer (3', 13') of fiber filaments impregnated in thermally curable resin, on which the flange or the connecting piece (2, 12) is positioned, is applied to the mandrel, the flange or the connecting piece (2, 12) is sheathed on the outside with at least one further layer (4', 14') of fiber filaments impregnated in thermally curable resin, the resin is thermally cured and the mandrel is removed.

11. The process as claimed in claim 10, **characterized in that** a layer of a resin-impregnated fiber filament is applied directly to the mandrel as the innermost layer.

12. The process as claimed in claim 10 or 11, **characterized in that** at least one further layer of resin-impregnated fiber filaments (5, 15) is applied to the fiber filaments (4, 14) incorporating the connecting pieces (12).

13. The process as claimed in one of claims 10 to 12, **characterized in that** the layers are produced by spirally winding a fiber filament (3, 13, 5, 15) which has been drawn through a resin bath.

14. The process as claimed in claim 13, **characterized in that** the fiber filament (3, 13, 5, 15) is wound at least substantially transversely in relation to the longitudinal extent of the line or the container.

15. The process as claimed in claim 10 or 11, **characterized in that** at least the fiber filaments incorporating the connecting pieces (2, 12) are component parts of a fiber fabric which is wound with a fiber filament (5, 15) impregnated with resin.

16. The process as claimed in claim 15, **characterized in that** the fiber fabric is applied in the form of a stocking or hose (4, 14).

17. The process as claimed in claim 15 or 16, **characterized in that** the fiber fabric is applied in such a way that the filaments are oriented at an angle of the order of 45° in relation to the longitudinal extent of the line or the container.

18. The process as claimed in one of claims 10 to 17, **characterized in that** a supporting tube (6) or a supporting casing is applied to an inner layer (13') using transitional pieces (7).

19. The process as claimed in claim 18, **characterized in that** the connecting piece or pieces (12), the transitional piece or pieces (7) and the supporting tube (6) or the supporting casing are together sheathed with resin-impregnated fiber filaments.

20. The process as claimed in one of claims 10 to 19, **characterized in that** the fiber filaments are carbon fiber or glass fiber filaments.

21. The process as claimed in one of claims 10 to 21, **characterized in that** the supporting tube or the supporting casing, the connecting pieces (2, 12) and the transitional pieces (7) consist of the same type of fiber, in particular of carbon fiber.

## Revendications

1. Conduite tubulaire ou récipient permettant de transporter ou de conserver des milieux cryogéniques, en particulier des gaz liquéfiés, par exemple de l'hydrogène liquide, avec une structure à plusieurs couches, ladite conduite ou ledit récipient présentant au moins une couche en fils de fibres incorporés dans une résine durcie par voie thermique, et étant doté d'au moins une bride ou pièce de jonction, laquelle est un élément spécifique qui est revêtu extérieurement d'au moins une couche (4', 14') de fils de fibres incorporés dans une résine durcie par voie thermique,
**caractérisé en ce que** la bride ou la pièce de jonction (2, 12) repose au moins sur une couche (3', 13') de fils de fibres incorporés dans une résine durcie par voie thermique, et est ainsi intégrée dans la structure de la conduite ou du récipient.

2. Conduite ou récipient selon la revendication 1, **caractérisé en ce que** les couches (3', 13', 5', 15') constituées de matière plastique renforcée par des fibres sont constituées d'au moins un fil de fibres (3, 13, 5, 15) incorporé dans la matière plastique, enroulé en hélice.

3. Conduite ou récipient selon la revendication 1 ou 2, **caractérisé en ce que** les fils de fibres sont enroulés, au moins pour leur plus grande partie, transversalement par rapport à la direction longitudinale de la conduite ou du récipient.

4. Conduite ou récipient selon l'une des revendications 1 à 3, **caractérisé en ce que** la couche (4', 14') intégrant les pièces de jonction (2, 12) est un tissu incorporé dans la matière plastique.

5. Conduite ou récipient selon la revendication 4, **caractérisé en ce que** les fils du tissu sont orientés selon un angle de l'ordre de 45° par rapport à la direction longitudinale de la conduite ou du récipient.

6. Conduite ou récipient selon l'une des revendications 1 à 5, **caractérisé en ce que**, autour de la couche intérieure (13'), et à une certaine distance de celle-ci, est agencé un tube protecteur (6) ou une enveloppe protectrice, qui est revêtu(e), conjointement avec la ou les pièces de jonction (12), d'une couche (14') de matière plastique renforcée par des fibres.

7. Conduite ou récipient selon l'une des revendications 1 à 6, **caractérisé en ce que**, entre le tube protecteur (6) ou l'enveloppe protectrice et la ou les pièces de jonction (12), sont contenus des raccords de réduction (7) annulaires.

8. Conduite ou récipient selon l'une des revendications 1 à 7, **caractérisé en ce que** les fibres sont des fibres de carbone ou des fibres de verre.

9. Conduite ou récipient selon l'une des revendications 1 à 8, **caractérisé en ce que** la matière plastique est une résine.

10. Procédé de fabrication d'une conduite tubulaire configurée avec plusieurs couches ou d'un récipient configuré avec plusieurs couches, permettant de transporter ou de conserver des milieux cryogéniques, en particulier des gaz liquéfiés, par exemple de l'hydrogène liquide, la conduite ou le récipient étant doté, à l'aide d'un mandrin, d'au moins une couche de fils de fibres imprégnés de résine durcie par voie thermique, et étant doté d'au moins une bride ou pièce de jonction, laquelle est un élément spécifique qui est revêtu extérieurement d'au moins une couche de fils de fibres imprégnés de résine durcie par voie thermique,
**caractérisé en ce que**, sur le mandrin, on applique au moins une couche (3', 13') de fils de fibres imprégnés de résine durcie par voie thermique, sur lesquels est positionnée la bride ou pièce de jonction (2, 12), la bride ou la pièce de jonction (2, 12) étant revêtue extérieurement d'au moins une autre couche (4', 14') de fils de fibres imprégnés de résine durcie par voie thermique, **en ce que** la résine est durcie par voie thermique, et **en ce qu'**on retire le mandrin.

11. Procédé selon la revendication 10, **caractérisé en ce que**, pour la couche la plus à l'intérieur, on applique directement sur le mandrin une couche constituée de fils de fibres imprégnés de résine.

12. Procédé selon la revendication 10 ou 11, **caractérisé en ce que**, sur les fils de fibres (4, 14) reliant les pièces de jonction (12), on applique au moins une autre couche constituée de fils de fibres (5, 15) imprégnés de résine.

13. Procédé selon l'une des revendications 10 à 12, **caractérisé en ce que** les couches sont réalisées en enroulant en hélice un fil de fibres (3, 13, 5, 15), qui a été étiré par l'intermédiaire d'un bain de résine.

14. Procédé selon la revendication 13, **caractérisé en ce que** le fil de fibres (3, 13, 5, 15) est enroulé, au moins pour sa plus grande partie, transversalement par rapport à la direction longitudinale de la conduite ou du récipient.

15. Procédé selon la revendication 10 ou 11, **caractérisé en ce qu'**au moins les fils de fibres reliant les pièces de jonction (2, 12) sont des composants d'un tissu de fibres, qui est enroulé avec un fil de fibres (5, 15) imprégné de résine.

16. Procédé selon la revendication 15, **caractérisé en ce que** le tissu de fibres est appliqué sous la forme d'un bas ou d'un tuyau flexible (4, 14).

17. Procédé selon la revendication 15 ou 16, **caractérisé en ce que** le tissu de fibres est appliqué de telle sorte que les fibres sont orientées selon un angle de l'ordre de 45° par rapport à la direction longitudinale de la conduite ou du récipient.

18. Procédé selon l'une des revendications 10 à 17, **caractérisé en ce que**, sur une couche intérieure (13'), on applique, à l'aide de raccords de réduction (7), un tube protecteur (6) ou une enveloppe protectrice.

19. Procédé selon la revendication 18, **caractérisé en ce que** la ou les pièce(s) de jonction (12), le ou les raccord(s) de réduction (7), et le tube protecteur (6) ou l'enveloppe protectrice, sont revêtus conjointement de fils de fibres imprégnés de résine.

20. Procédé selon l'une des revendications 10 à 19, **caractérisé en ce que** les fils de fibres sont des fils de fibres de carbone ou de verre.

21. Procédé selon l'une des revendications 10 à 20, **caractérisé en ce que** le tube protecteur ou l'enveloppe protectrice, les pièces de jonction (2, 12), et les raccords de réduction (7), sont constitués du même type de fibres, en particulier des fibres de carbone.
